# EUROPÄISCHE PATENTSCHRIFT

(11) **EP 2 030 281 B1**
(45) Veröffentlichungstag und Bekanntmachung des Hinweises auf die Patenterteilung: **13.07.2011**
(21) Anmeldenummer: 07764325.2
(22) Anmeldetag: 09.05.2007
(51) Int. Cl.: H01M 10/50, H01M 2/02, H01M 10/06, H01M 10/42, H01M 2/38

(54) **FLÜSSIGELEKTROLYTBATTERIEHEIZUNGSANORDNUNG**
LIQUID ELECTROLYTE BATTERY HEATING DEVICE
DISPOSITIF DE CHAUFFAGE DE BATTERIE À ÉLECTROLYTE LIQUIDE

(30) Priorität: 09.05.2006 DE 102006021582
(43) Veröffentlichungstag der Anmeldung: 04.03.2009
(73) Patentinhaber: IQ Power Licensing AG, 6300 Zug (CH)
(72) Erfinder: BAUER, C., Günther, 8551 Ottobrunn (DE)
(74) Vertreter: Müller & Schubert
(86) Internationale Anmeldenummer: PCT/DE2007/000836
(87) Internationale Veröffentlichungsnummer: WO 2007/128295

(56) Entgegenhaltungen:
- DE-A1- 19 722 361
- US-A1- 2002 028 373

## Beschreibung

Die Erfindung betrifft eine Flüssigelektrolytbatterieheizungsanordnung mit einer Heizung und einer auf diese Heizung abgestimmte Flüssigelektrolytbatterie, wie z. B. eine Blei-Säure-Batterie, die z. B. als Starterbatterie in Fahrzeugen eingesetzt wird.

Das Bestreben der Fahrzeugindustrie nach Leichtbauweise betrifft auch die Einsparung von Batteriegewicht. Gleichzeitig steigt jedoch die Anforderung nach höherer Batterieleistung, da neben der herkömmlichen Energie zum Starten z. B. eines PKW auch Energie für zusätzliche Aggregate wie elektrische Fensterheber, Stellmotore zum Verstellen der Sitze oder auch zum elektrischen Beheizen der Sitze benötigt wird. Ferner ist es wünschenswert, die Batterieleistung über die Lebensdauer der Batterie möglichst auf einem konstanten hohen Niveau zu halten, da zunehmend auch sicherheitsrelevante Funktionseinheiten wie Lenkung und Bremsen elektrisch gesteuert und betätigt werden. Unter Batterieleistung wird nachfolgend die Kapazität der Batterie sowie die Fähigkeit der Batterie zur Stromabgabe bzw. zur Stromaufnahme verstanden. Die Batterieleistung wird von verschiedenen, dem Fachmann bekannten Faktoren beeinflusst.

Aus dem Stand der Technik sind verschiedene Maßnahmen bekannt, um die Leistung einer Flüssigelektrolytbatterie, wie z. B. einer Blei-Säure-Batterie zu erhöhen. Ein besonderes Problem bei diesen Batterien ist, dass die Batterieleistung eine starke Abhängigkeit von der Batterietemperatur aufweist. In einem zulässigen Betriebsbereich ist mit einem Kapazitätsrückgang von ca. 0,6 bis 0,8 % pro Grad Celsius oder mehr zu rechnen. Wird angenommen, dass eine optimale Betriebstemperatur bei ca. 30 Grad Celsius liegt und die Batterie bei minus 20 Grad Celsius betrieben wird, um z. B. den Anlasser eines Fahrzeugs zu betätigen, dann würde diese Batterie nur noch ca. 60 % ihrer Kapazität aufweisen. Es ist jedoch dem Fachmann bekannt, dass weitere Einflussfaktoren die Kapazität der Batterie verringern. Ein wesentlicher Einflussfaktor ist die sogenannte Stratifikation der Säure, d. h. die Säurekonzentration ist bezüglich der Elektrodenfläche nicht gleichmäßig. Das bewirkt, dass die Elektroden an Stellen, an denen die Säurekonzentration zu hoch ist, korrodieren, so dass sich die Lebensdauer der Batterie vermindert, und an den Elektrodenstellen, an denen die Säurekonzentration zu gering ist, erreicht die Batterie nicht ihre volle Leistung.

Es ist allgemein bekannt, dass Fahrzeuge mit einer Brennkraftmaschine, die längere Zeit, z. B. mehr als 8 Stunden, bei Temperaturen unter Null Grad Celsius gestanden haben, sich besser starten lassen, wenn die ausgekühlte Batterie vor dem Start angewärmt wurde.

Daher sind eine Vielzahl von Batterieheizeinrichtungen entwickelt worden, die verschiedene Vor- und Nachteile aufweisen und z. B. in den Dokumenten DE 28 12 876, US 2,440,369, DE 1 496 134, DE 40 27 149 A1 oder DE 100 14 848 beschrieben wurden.

Die US 2002/028373 A1 beschreibt eine Flüssigelektrolytbatterie mit einer Durchmischungsvorrichtung und einer Heizvorrichtung. Die Heizvorrichtung ist bei dieser Batterie an einer Seitenwand des Batteriegehäuses aufgeklebt. Die Durchmischungsvorrichtung ist auf die Heizvorrichtung so abgestimmt, dass einerseits eine optimale Durchmischung erfolgt und andererseits vermieden wird, dass eine Überhitzung der Elektrodenabschnitte erfolgt, die nahe bei der Heizung liegen. Die DE 197 22 361 A1 offenbart ebenfalls eine Flüssigelektrolytbatterie mit einer als innere Trennwand ausgebildeten Heizung. In beiden Druckschriften ist die Heizung jeweils seitlich angeordnet ist, d. h. parallel zu einer Seitenwand der Batterie. Ebenso ist die Heizung mit der Batterie mechanisch fest verbunden.

Die Batterieheizvorrichtungen können nach verschieden Gesichtspunkten klassifiziert werden.

Eine Gruppe betrifft die Heizung der Batterie durch Wärmeaustausch. So wurde z. B. vorgeschlagen, an der Außenwand einer Batterie Wärmetauscherrohre vorzusehen, durch die warme Motorkühlflüssigkeit geleitet wird.

Vielfach wurden auch elektrische Heizungen vorgeschlagen, wobei diese Gruppe in zwei Untergruppen geteilt werden kann.

Es gibt eine Reihe von Ideen, Heizfolien oder ähnliche Heizelemente an der Außenwand oder auch in der Batterie selbst anzuordnen und die elektrische Energie extern zuzuführen, z. B. bei einem in einer Garage parkenden Fahrzeug aus einem 220 V Netzanschluss. Hier steht immer genügend Energie zur Verfügung, so dass die Batterie unabhängig von der Außentemperatur auf einer vorbestimmten Temperatur gehalten werden kann. Ebenso ist es möglich, die Energie aus der Lichtmaschine zu entnehmen, wenn das Fahrzeug fährt.

Bei der zweiten Untergruppe wird die Energie zur Beheizung der Batterie aus dieser selbst entnommen. Das ist dann erforderlich, wenn das Fahrzeug auf der Strasse abgestellt ist und keine Möglichkeit besteht, elektrische Energie von außen zuzuführen. Es wurde bereits vorgeschlagen, die Batterie thermisch gut zu isolieren und mittels der Selbstheizung auf einem möglichst optimalen Temperaturniveau zu halten. Diese Methode ist nur sinnvoll, wenn das Fahrzeug lediglich ca. 8 bis 15 Stunden steht und auskühlt und danach das Fahrzeug wieder benutzt wird, d. h. die thermische Isolation der Batterie muss so gut sein, dass die Batterie in diesen ca. 8 bis 15 Stunden durch die Selbstheizung auf dem gewünschten Temperaturniveau gehalten werden kann.

Wenn das Fahrzeug jedoch mehrere Tage steht, reicht der Energiegehalt der Batterie nicht aus, um selbst eine gut isolierte Batterie auf der wünschenswerten Temperatur zu halten. Es ist für solche Fälle notwendig, die Batterie erst dann zu erwärmen, wenn ein Start des Fahrzeugs vorgesehen ist.

Es wurde daher mehrfach vorgeschlagen, die kalte Batterie erst kurz vor dem Start des Fahrzeugs zu erwärmen. Eine von mehreren Möglichkeiten, eine Batterie schnell zu erwärmen, ist ein Wärmeeintrag am Batterieboden.

Es wurde daher in der DE 100 14 848 C2 vorgeschlagen, die Batterie auf eine Wärmeplatte zu stellen, wobei es in diesem Zusammenhang unerheblich ist, ob es sich um eine herkömmliche elektrisch beheizbare Wärmeplatte handelt oder - wie bei der DE 100 14 848 C2 - um eine Abwärme erzeugende elektronische Baugruppe, die eigentlich für andere Zwecke eingesetzt wird.

Eine Starterbatterie hat wie jeder materielle Körper eine vorbestimmte Wärmekapazität. Um eine kalte Batterie auf ein vorbestimmtes Temperaturniveau anzuheben, muss eine vorbestimmte Wärmeenergie eingebracht werden. Es ist wünschenswert, dass die Batterie in möglichst kürzester Zeit erwärmt werden kann. Das ist nur möglich, wenn die Wärmeplatte entsprechend stark beheizt wird.

Da sich jedoch die Wärme auf Grund der schlechten Wärmeleitung der Säure nur relativ langsam verteilt, d. h. ein Temperaturausgleich nur langsam erfolgt, kann es an den Stellen, wo die Wärmeenergie eingetragen wird, zu Elektrodenschäden kommen. Dem Fachmann ist bekannt, dass eine Blei-Säure-Batterie bereits bei kurzzeitiger Überhitzung, z. B. bei über 50 Grad Celsius irreversibel geschädigt werden kann.

Daher steht der Forderung nach einer schnellen Erwärmung der Batterie die Forderung gegenüber, dass die Batterie möglichst schonend, d. h. langsam erwärmt werden sollte, damit sie nicht geschädigt wird. Die Lösung dieses technischen Widerspruchs bildet die Aufgabe der Erfindung.

Diese Aufgabe wurde mit einer Flüssigelektrolytbatterieheizungsanordnung mit thermischer Durchmischung gelöst, die aufweist:
a. zwei Heizelemente als Standfläche für eine
b. Flüssigelektrolytbatterie die aufweist:
   - ein Gehäuse mit einem Gehäuseboden, der randseitig erwärmbar ist,
   - Elektroden, die in dem Gehäuse senkrecht angeordnet sind und
   - ein Flüssigelektrolyt, wobei
   in der Batterie eine plattenförmige Durchmischungsvorrichtung mit nachfolgenden Merkmalen angeordnet ist:
   - zwischen dem Gehäuseboden und der Unterkante der Elektroden sind zwei erste Platten so angeordnet, dass eine mittige Durchströmungsöffnung frei bleibt,
   - zwischen den senkrechten Gehäusewänden und den Seitenkanten der Elektroden sind zwei zweite Platten angeordnet, die mit den erste Platten verbunden sind und
   - einige Millimeter oberhalb des Elektrolytpegels des Elektrolyts sind zwei Überlaufplatten angeordnet, wobei die äußeren Kanten der Überlaufplatten mit den oberen Kanten der zweiten Platten verbunden sind und die inneren Kanten der Überlaufplatten voneinander beabstandet sind und eine Einlauföffnung freilassen.

Die Batterie weist eine thermische Elektrolytdurchmischung mit einem Überhitzungsschutz auf, wobei die Batterie auf zwei schienenförmigen Heizelementen steht, so dass eine Erwärmung des Batteriebodens nur am Rand erfolgt. Die Batterie weist ein Gehäuse auf, in dem Elektroden senkrecht angeordnet sind. Ein Flüssigelektrolyt ist bis über die oberen Kanten der Elektroden eingefüllt. Die Batterie steht so auf den Heizschienen, dass diese in einem Winkel von 90 Grad zu den Elektrodenplatten verlaufen, was im Ausführungsbeispiel noch näher erläutert wird.

Erfindungsgemäß wird vorgeschlagen, dass in der Batterie eine plattenförmige Durchmischungsvorrichtung mit nachfolgenden Merkmalen angeordnet ist: Zwischen dem Gehäuseboden und der Unterkante der Elektroden sind zwei erste Platten so angeordnet, dass eine mittige Durchströmungsöffnung frei bleibt. Zwischen den senkrechten Gehäusewänden und den Seitenkanten der Elektroden sind zwei zweite Platten angeordnet, die mit den ersten Platten verbunden sind. Vorzugsweise einige Millimeter oberhalb des Elektrolytpegels des Elektrolyts sind zwei Überlaufplatten angeordnet, wobei die äußeren Kanten der Überlaufplatten mit den oberen Kanten der zweiten Platten verbunden sind und die inneren Kanten der Überlaufplatten voneinander beabstandet sind und eine Einlauföffnung freilassen.

Wenn die erfindungsgemäßen schienenförmigen Heizelemente die bodenseitigen Randbereiche des Batteriegehäuses erwärmen, so entsteht zwischen den senkrechten Gehäusewänden und den zweiten Platten jeweils ein senkrechter Strömungskanal, durch den der erwärmte Elektrolyt aufwärts strömt, ohne das der heiße Elektrolyt direkt mit den Elektroden in Berührung zu kommt. Da der Elektrolyt stark erhitzt wird, sprudelt er etwas beim Austritt aus dem Strömungskanal und läuft dadurch über die Überlaufplatten bis zur Einlauföffnung und somit in das Elektrolytvolumen zurück, in dem sich der warme Elektrolyt sofort abgekühlt. Durch die Durchströmungsöffnung strömt kalter Elektrolyt nach unten zu den Rändern des Gehäuses nach und wird dort erhitzt.

Mit der Erfindung werden zwei wesentliche Vorteile erreicht: Der Elektrolyt kann stark erhitzt werden, ohne dass dadurch die wärmeempfindlichen Elektrodenplatten geschädigt werden. Das wird deshalb vermieden, weil der heiße Elektrolyt von den Elektroden abgeschirmt wird. Somit kann die Batterie schnell erwärmt werden.

Weiterhin entsteht eine aufwärtsgerichtete Elektrolytströmung, so dass eine zügige Durchmischung des Elektrolyten bewirkt wird. Dadurch werden nicht nur schädliche Temperaturgradienten verhindert, sondern auch die unerwünschte Schichtung des Elektrolyten, die besonders von Blei-Säure-Batterien bekannt ist.

Nach Anspruch 2 weisen die Überlaufplatten Löcher auf, durch die sich der warme Elektrolyt über die gesamte Elektrolytoberfläche verteilt. Dadurch wird eine bessere Durchmischung erreicht.

Nach Anspruch 3 sind die Löcher so ausgebildet, dass sie ausgehend von der Batteriegehäusewand zur Einlauföffnung zunehmend größer werden. Dadurch wird eine noch bessere Durchmischung erreicht.

Es ist klar, dass die Erfindung auf jede Art von Batterie mit einem flüssigen Elektrolyten angewendet werden kann, wenn bei der bodenseitigen Erwärmung dieser Batterie die Gefahr einer thermischen Schädigung der Elektroden durch Kontakt mit zu heißem Elektrolyten besteht.

Der Fachmann kann durch die Wahl der geometrischen Parameter, wie z. B. der Lochgröße und deren Verteilung und unter Berücksichtigung der vorgesehenen Heizleistung ein Optimum für eine schnelle Durchwärmung der Batterie finden - ohne dass dabei die Batterie einen thermisch geschädigt wird. Dazu ist es lediglich erforderlich, z. B. mittels Thermoelemente das Temperaturprofil über dem Überhitzungsschutz zu ermitteln und die Löcher so auszubilden und anzuordnen, dass an keiner Stelle innerhalb der Batterie und unter keinen Umständen die Säure bzw. der Elektrolyt so heiß wird, dass die Elektroden geschädigt werden könnten.

Weitere Maßnahmen und Vorteile der Erfindung ergeben sich aus der nachfolgenden Beschreibung der Ausführungsbeispiele in Verbindung mit den beigefügten schematischen Zeichnungen.
- Fig. 1: zeigt eine seitliche Schnittansicht einer ersten Ausführungsform der Erfindung.
- Fig. 2: zeigt eine seitliche Schnittansicht einer zweiten Ausführungsform der Erfindung.
- Fig. 3: zeigt einen leeren Batteriekasten nach dem Stand der Technik. Technik.

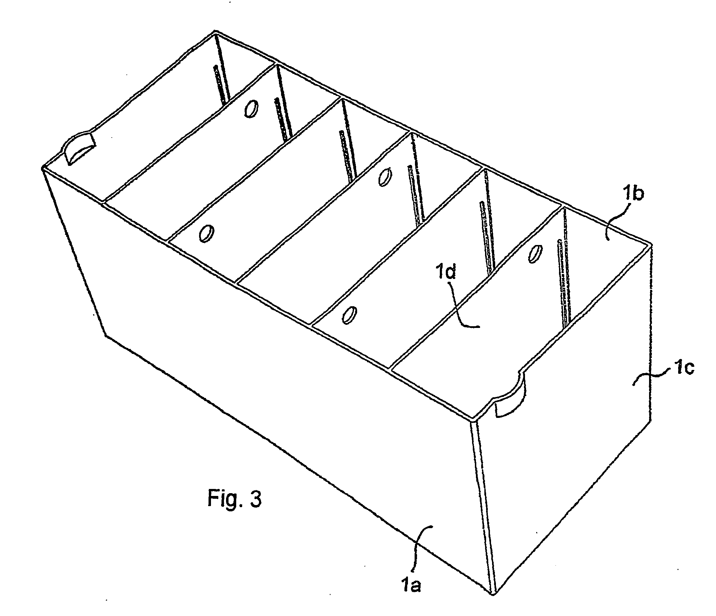

Die nachfolgende Erläuterung der Erfindung beginnt mit dem Stand der Technik nach Fig. 3, da dadurch die Erfindung leichter verständlich wird.

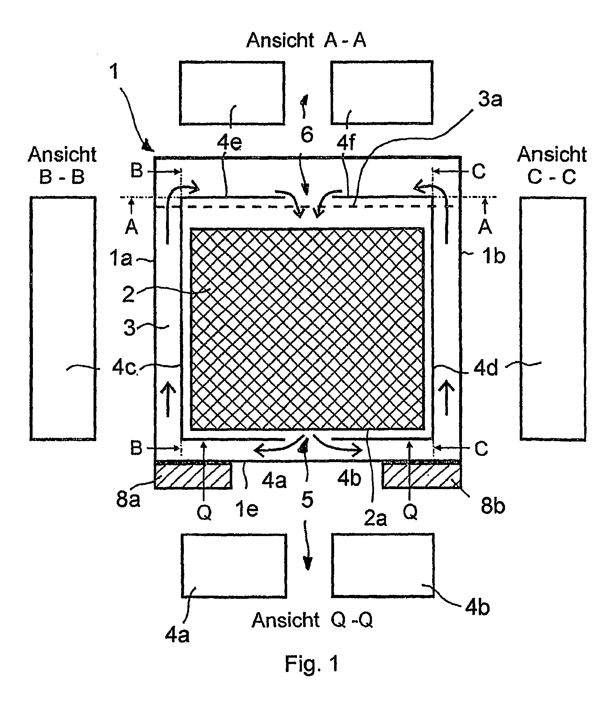

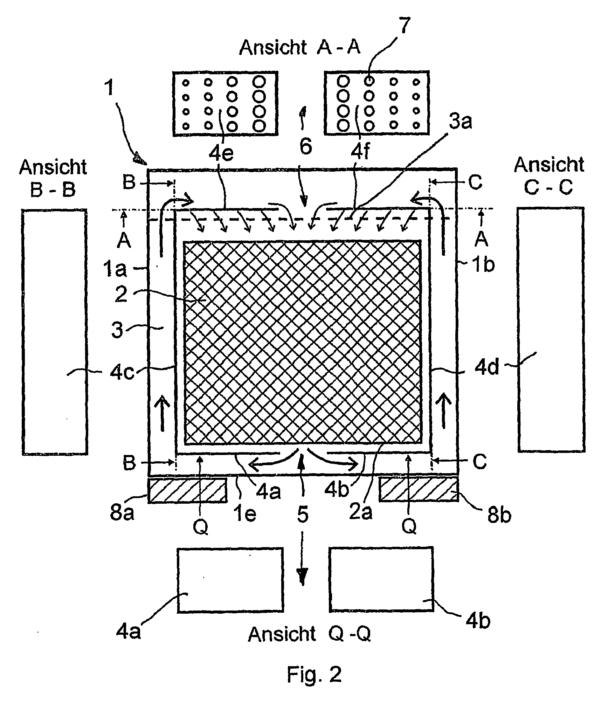

Die Fig. 3 zeigt einen Batteriekasten mit 6 Zellen. Wenn dieser Batteriekasten mit seiner Grundfläche auf zwei Heizschienen steht, wird jede der Zellen randseitig am Boden erwärmt. Alle nachfolgenden Erläuterungen beziehen sich jedoch nur auf eine einzige Zelle, wobei diese Zelle in Fig. 1 und 2 von der Richtung aus dargestellt ist, die in Fig. 3 mit dem Bezugszeichen 1c bezeichnet ist. Da diese Zelle eine eigenständige Batterie ist, wird nachfolgend nur noch von einer Batterie gesprochen.

Die Fig. 1 zeigt eine Batterie mit einem Gehäuse 1, das mit einem Flüssigelektrolyt 3 gefüllt ist, und in welchem senkrecht stehende Elektroden 2 angeordnet sind. Die Batterie steht auf zwei elektrisch erwärmbaren Heizschienen 8a, 8b. Wenn die Batterie unterkühlt ist, werden diese Heizschienen elektrisch erhitzt. Die Energie für die Heizschienen kann aus der Batterie selbst entnommen werden oder aus einer externen Energiequelle. Die Heizschienen sind temperaturgeregelt, so dass eine vorbestimmte Höchsttemperatur nicht überschritten wird.

Zwei erste Kunststoff platten 4a und 4b sind zwischen dem Gehäuseboden 1 e und den Elektroden 2 angeordnet, wobei beide Plattenenden in Richtung Gehäusemitte voneinander beabstandet sind, so dass eine Durchströmungsöffnung 5 freibleibt. Zwischen der senkrechten Batteriewand 1 und den senkrechten Kanten der Elektroden 2 sind zwei weitere Platten 4c und 4d angeordnet, die mit den erste Platten 4a, 4b verbunden sind. Einige Millimeter oberhalb des Elektrolytpegels 3a des Elektrolyten 3 sind zwei Überlaufplatten 4e, 4f angeordnet, wobei die äußeren Kanten der Überlaufplatten 4e und 4f mit den oberen Kanten der zweiten Platten 4c und 4d verbunden sind und die inneren Kanten der Überlaufplatten (4e, 4f) voneinander beabstandet sind und eine Einlauföffnung (6) freilassen.

Nach dem Einschalten der Heizschienen 8a und 8b wird die bodenseitige Elektrolytschicht an den Außenrändern des Gehäuses erwärmt. Die sich ausbildende aufwärtsgerichtete Konvektionsströmung des Elektrolyten 3 ist durch die Strömungspfeile dargestellt, d. h. der Elektrolyt strömt aufwärts und läuft dann über die Überlaufplatten 4e und 4f in Richtung der Einlauföffnung 6 und durch diese in das Elektrolytvolumen zurück. Der Fachmann erkennt, dass somit auf jeder Gehäuseseite, unter der die Heizschienen 8a und 8b angeordnet sind, ein Elektrolytströmungskreislauf entsteht, der eine gute Durchmischung des Elektrolyten bewirkt.

Die Fig. 2 zeigt eine modifizierte Ausführungsform der Erfindung. In den Überlaufplatten 4e und 4f sind Löcher 7 vorgesehen. Die Lochgröße wird zur Gehäusemitte hin größer, so dass der Elektrolyt sich nahezu gleichmäßig über die Oberfläche des Elektrolyten verteilt und somit eine besonders gute Durchmischung erfolgt. Die kleinsten Löcher haben einen Durchmesser von ca. 1 mm und die größten Löcher einen Durchmesser von 2, 5 mm. Die Lochgröße wird in Abhängigkeit der Konsistenz des Elektrolyten ausgewählt.

Diese Ausführungsform ist die beste Ausführungsform der Erfindung. An Hand der beschriebenen Ausführungsformen kann der Fachmann die technische Lehre der vorliegenden Erfindung vollständig entnehmen. Es ist klar, dass diese Ausführungsformen durch einen Fachmann mit Hilfe der erfindungsgemäßen Lehre weiterentwickelt und modifiziert oder kombiniert werden können. Daher fallen auch diese, nicht explizit genannten oder gezeigten weiteren Ausführungsformen in den Schutzbereich der nachfolgenden Patentansprüche.

## Patentansprüche

1. Flüssigelektrolytbatterieheizungsanordnung mit thermischer Durchmischung, die aufweist:
a. zwei Heizelemente **(8a, 8b)** als Standfläche für eine
b. Flüssigelektrolytbatterie die aufweist:
- ein Gehäuse **(1)** mit einem Gehäuseboden **(1e),** der randseitig erwärmbar ist,
- Elektroden **(2),** die in dem Gehäuse **(1)** senkrecht angeordnet sind und
- ein Flüssigelektrolyt **(3),** wobei
in der Batterie eine plattenförmige Durchmischungsvorrichtung mit nachfolgenden Merkmalen angeordnet ist:
- zwischen dem Gehäuseboden **(1e)** und der Unterkante **(2a)** der Elektroden **(2)** sind zwei erste Platten **(4a, 4b)** so angeordnet, daß eine mittige Durchströmungsöffnung **(5)** frei bleibt,
- zwischen den senkrechten Gehäusewänden **(1a, 1b)** und den Seitenkanten der Elektroden **(2)** sind zwei zweite Platten **(4c, 4d)** angeordnet, die mit den erste Platten **(4a, 4b)** verbunden sind und
- einige Millimeter oberhalb des Elektrolytpegels **(3a)** des Elektrolyts **(3)** sind zwei Überlaufplatten **(4e, 4f)** angeordnet, wobei die äußeren Kanten der Überlaufplatten **(4e, 4f)** mit den oberen Kanten der zweiten Platten **(4c, 4d)** verbunden sind und die inneren Kanten der Überlaufplatten **(4e, 4f)** voneinander beabstandet sind und eine Einlauföffnung **(6)** freilassen.

2. Batterie nach Anspruch 1, **dadurch gekennzeichnet, daß** die Überlaufplatte **(4e, 4f)** Löcher **(7)** aufweisen.

3. Batterie nach Anspruch 2, **dadurch gekennzeichnet, daß** die Löcher **(7)** ausgehend vom Gehäuse zur Einlauföffnung **(6)** zunehmend größer werden.

## Claims

1. Liquid electrolyte battery heating device with thermal mixing, which comprises:
a. two heating elements (8a, 8b) as a support surface for a
b. liquid electrolyte battery, which comprises:
- a housing (1) having a housing base (1e) that can be heated at the edges,
- electrodes (2) which are arranged perpendicularly in the housing (1) and
- a liquid electrolyte (3), wherein
a plate-shaped mixing device is disposed in the battery, having the following features:
- two first plates (4a, 4b) are arranged between the housing base (1e) and the bottom edge (2a) of the electrodes (2) such that a central flow opening (5) is left free,
- between the perpendicular housing walls (1a, 1 b) and the side edges of the electrodes (2) are arranged two second plates (4c, 4d) which are connected to the first plates (4a, 4b) and
- a few millimetres above the electrolyte level (3a) of the electrolyte (3) are arranged two overflow plates (4e, 4f), the outer edges of the overflow plates (4e, 4f) being connected to the upper edges of the second plates (4c, 4d) and the inner edges of the overflow plates (4e, 4f) being spaced apart and leaving an inlet opening (6) free.

2. Battery according to claim 1, **characterised in that** the overflow plates (4e, 4f) comprise holes (7).

3. Battery according to claim 2, **characterised in that** the holes (7) become increasingly larger from the housing towards the inlet opening (6).

## Revendications

1. Dispositif de chauffage de batterie à électrolyte liquide avec brassage thermique, comprenant :
a) deux éléments chauffants (8a, 8b) servant de surface d'appui à une
b) batterie à électrolyte liquide comprenant :
- un boîtier (1) avec un fond de boîtier (1e) qui peut être chauffé sur le bord,
- des électrodes (2) disposées verticalement dans le boîtier (1), et
- un électrolyte liquide (3),
dans lequel un dispositif de brassage sous la forme de plaques ayant les caractéristiques suivantes est disposé dans la batterie :
- deux premières plaques (4a, 4b) sont disposées entre le fond de boîtier (1e) et le bord inférieur (2a) des électrodes (2) de manière à laisser dégagé un orifice d'écoulement central (5),
- deux deuxièmes plaques (4c, 4d) reliées aux premières plaques (4a, 4b) sont disposées entre les parois verticales (1a, 1b) du boîtier et les parois latérales des électrodes (2), et
- deux plaques de trop-plein (4e, 4f) sont disposées quelques millimètres au-dessus du niveau (3a) de l'électrolyte (3), les bords extérieurs des plaques de trop-plein (4e, 4f) étant reliés aux bords supérieurs des deuxièmes plaques (4c, 4d) et les bords intérieurs des plaques de trop-plein (4e, 4f) étant espacés l'un de l'autre et laissant dégagé un orifice d'entrée (6).

2. Batterie selon la revendication 1, **caractérisée en ce que** les plaques de trop-plein (4e, 4f) présentent des trous (7).

3. Batterie selon la revendication 2, **caractérisée en ce que** les trous (7) sont de plus en plus grands depuis le boîtier en direction de l'orifice d'entrée (6).
